# NEW EUROPEAN PATENT SPECIFICATION

(11) **EP 0 323 550 B2**
(45) Date of publication and mention of the opposition decision: **21.07.1999**
(45) Mention of the grant of the patent: 20.07.1994
(21) Application number: 88116723.3
(22) Date of filing: 08.10.1988
(51) Int. Cl.: G01B 21/00

(54) **Optical rule**
Optischer Massstab
Mesure optique

(30) Priority: 14.10.1987 IT 2228187; 14.09.1988 IT 2193388
(43) Date of publication of application: 12.07.1989
(73) Proprietor: LINEAR SYSTEM S.R.L., I-20052 Monza (Milan) (IT)
(72) Inventor: Vanzo, Augusto, I-20124 Milan (IT); Sircana, Antonio, I-20133 Milan (IT)
(74) Representative: Modiano, Guido, Dr.-Ing.

(56) References cited:
- EP-B- 0 188 189
- DE-A- 3 509 390
- DE-C- 2 712 421
- DE-C- 2 712 421
- GB-A- 1 442 165
- GB-B- 1 230 433
- US-A- 4 509 262
- RSF-Elektronik, Catalogues 6-1986 and 6-1991
- ACU-RITE, Catalogue 9-1986

## Description

The present invention relates to an optical rule with means for its fixing to a fixed structure.

As is known, in many industrial applications. such as in machine tools and the like, optical rules are currently used to detect the precise position of the machine. Optical rules generally have an elongated body or base which supports a series of reference notches which are detected by a reading head connected to a moving element which is connected to the movable part of the machine.

Known from GB-A-1,442,165 is an optical rule comprising an elongated profiled body having, on its outer surface a female dovetail coupling element for its removable coupling to means for fixing the optical rule to a fixed structure.

An optical rule as defined in the precharacterizing part of claim 1 is made by GIVI MISURE under the name of "Optical rule ISA 2320".

With known solutions, considerable problems are currently encountered in precisely and rapidly positioning the optical rule on the machine, since available optical rules have no means, for their fixing to the fixed structure, which are versatile and capable of adapting to the different types of application.

Another disadvantage, observable in known rules, is the need for particular adaptations which must be performed on the optical rule at the moment of its installation on the machine tool or the like, to adapt the rule's coupling elements to the particular machine.

Another disadvantage furthermore resides in that known means do not always allow to compensate any irregularities in the surface onto which the optical rule is applied, with considerable difficulties during installation; furthermore all normal maintenance operations require a disassembly of the rule, with successive new complications in its re-application.

The aim of the present invention is indeed to eliminate the disadvantages described above by providing an optical rule with means for its fixing to the fixed structure which allows it to rapidly and easily adapt to all contingent installation conditions without thereby having to perform any particular modification of the rule itself.

Within the scope of the above described aim, a particular object of the invention is to provide an optical rule wherein it is possible to indifferently use various fixing means which all offer the advantage of great rapidity in installation and of reliability.

Another object of the present invention is to provide an optical rule which is structured so as to always obtain perfect installation conditions, even if the resting surfaces are not perfectly positioned or aligned.

Not least object of the present invention is to provide an optical rule which is easily obtainable starting from elements and materials commonly available on the market and which is furthermore competitive from a merely economical point of view.

The above described aim, as well as the objects mentioned and others which will become apparent hereinafter, are achieved by an optical rule as defined in the appended claims. Further characteristics and advantages will become apparent from the description of a preferred but not exclusive embodiment of an optical rule illustrated only by way of non-limitative example in the accompanying drawings, wherein:
figure 1 is a schematic and partially cutout front view of the optical rule with upper fixing means;
figure 2 is a partially cutout plan view of the upper fixing means;
figure 3 is a perspective view of a block for upward fixing;
figure 4 is a transverse sectional view of the rule, illustrating means for its lateral fixing;
figure 5 is a transverse sectional view of the rule with a bush arranged at the lateral fixing means;
figure 6 is a partially cutout front view of the fixing means which engage upwardly to the optical rule and fix to a lateral wall;
figure 7 is a lateral view of the optical rule with the fixing means of figure 6;
figure 8 is a view of the block for lateral fixing to the fixed structure and engagement with the upper part of the optical rule;
figure 9 is a sectional view taken along the line IX-IX of figure 6;
figure 10 is a sectional view taken along the line X-X of figure 6;
figure 11 is a sectional view taken along the line XI-XI of figure 6;
figure 12 is a view of the front-coupling fixing means;
figure 13 is a schematic exploded perspective view of the rule according to another aspect of the invention;
figure 14 is a perspective view of the rule of figure 13 seen from its coupling face;
figure 15 is a schematic plan view of the rule of figure 13 applied to the supporting profiled element of an optical rule;
figure 16 is a schematic elevation view of the rule of figure 13 with a supporting profiled element of an optical rule applied thereto;
figure 17 is a sectional view taken along the line XVII-XVII of figure 15;
figures 18 and 19 are sectional views taken along the line XVIII-XVIII of figure 16 in two different operating conditions;
figure 20 is a sectional view taken along the line XX-XX of figure 16; and
figure 21 is a sectional view taken along the line XXI-XXI of figure 16.
figure 22 is a view of means for locking and positioning the moving element with respect to the profiled body;
figure 23 is a perspective view of the means for locking the moving element; and
figure 24 is a sectional view taken along the line XV-XV of figure 13.

With reference to the above described figures, the optical rule comprises a profiled body, generally indicated by the reference numeral 1, which is advantageously obtained by means of an extruded element in aluminum or similar alloys which has, in transverse cross section, a substantially U-shaped configuration.

The profiled element 1 has, on its outer surface, a female dovetail coupling element 10 arranged in its central portion and a male dovetail coupling element 11 which is arranged on one of the lateral arms.

The profiled element 1 is internally provided with longitudinal grooves 15, which act as guiding elements for the sliding of the reading head 16 to which the moving element or slider 17 is connected.

In order to prevent dust infiltrations there are two opposite pairs of gaskets 19 which engage with the stem 20 of the slider.

The profiled body thus has various means for its fixing to the fixed structure, so as to be easily adaptable to all contingent installation conditions.

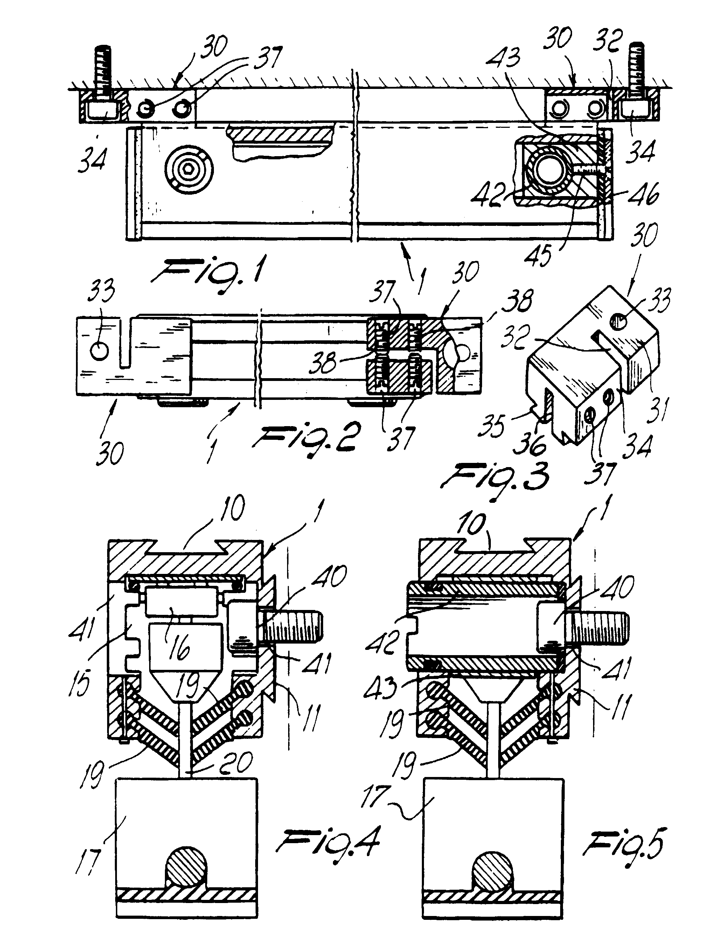

As schematically illustrated in figures 1 to 3, the application of the profiled body to the fixed structure can be obtained by means of end blocks, generally indicated by the reference numeral 30, which have a lateral tab 31 separated from the remaining portion of the block by a transverse notch 32. On the tab 31 there is a hole 33 for its engagement with a screw 34 which allows its fixing to an upwardly arranged fixed structure.

In the remaining portion of the block 30 there are dovetail feet 35 separated by a longitudinal notch 36.

On the opposite sides of the longitudinal notch there are threaded holes 37 in which there engage dowels 38 which are moved into mutual abutment to obtain a spacing of the dovetail feet, with their consequent locking in the female dovetail element 10.

The provision of opposite dowels allows to use the same block for fixing to both ends of the elongated body.

According to what is illustrated in figures 4 and 5, it is possible to perform the lateral fixing of the profiled element by means of a through screw 40 which engages in openings 41 defined at a side of the elongated body 1. A bush 42 is applicable where the through screw 40 is applied, and sealingly closes the openings and furthermore acts as stop element for the sliding of the moving element. The bush 42, which is externally threaded, retains a tension block 43 which has a seat for the accommodation of the bush and is tensioned, at its axial end, by a locking screw 45 which engages the end plate 46 arranged to close the profiled bar.

This arrangement allows to extract the bush, for removing the moving element without having to separate the elongated body from the wall.

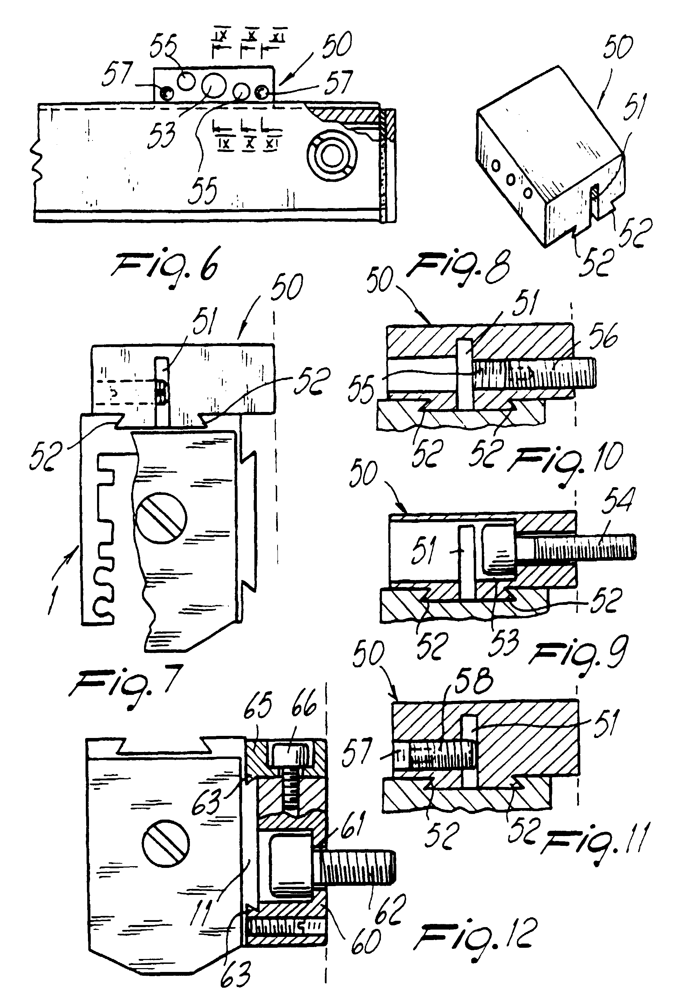

According to what is illustrated in figures 6 to 11, a lateral-fixing block 50 is provided as fixing means and engages in the female dovetail coupling element 10. Said block 50 has a longitudinal slot 51 which separates dovetail coupling feet 52 which are insertable in the female dovetail coupling element.

Transversely to the longitudinal extension of the slot there is a central fixing hole 53 in which there engages a screw for fixing to the lateral wall 54, and there is a pair of locator holes 55 in which abutment dowels 56 insert and allow to compensate any irregularities in the resting surface.

Laterally to the locator holes 55 there is a threaded locking hole 57 in which a locking dowel 58 is inserted and abuts with the opposite wall of the slot and spreads apart the dovetail locking feet 52 to insert and lock the profiled body.

The solution illustrated in figure 12 allows the frontward application of the bar without extracting it from the coupling means along the direction of its longitudinal extension.

Said frontward coupling means are constituted by a front bar 60 having through holes 61 in which locking screws 62 engage. The front bar also has a lower seat 63 which couples to the lower portion of the male dovetail coupling element, as well as upper portions 65 which engage with the upper portion of the male dovetail coupling element, and are locked by means of coupling screws 66 which join them to the front bar. With this arrangement, by removing the upper portion it is possible to obtain a frontward uncoupling of the elongated body from the locking means.

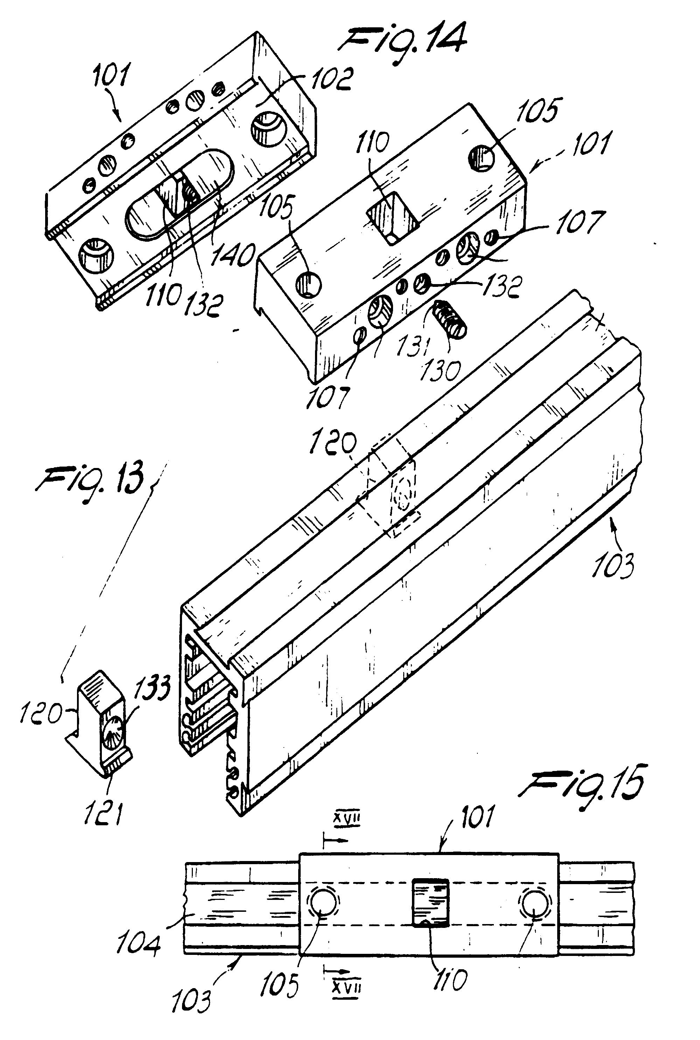

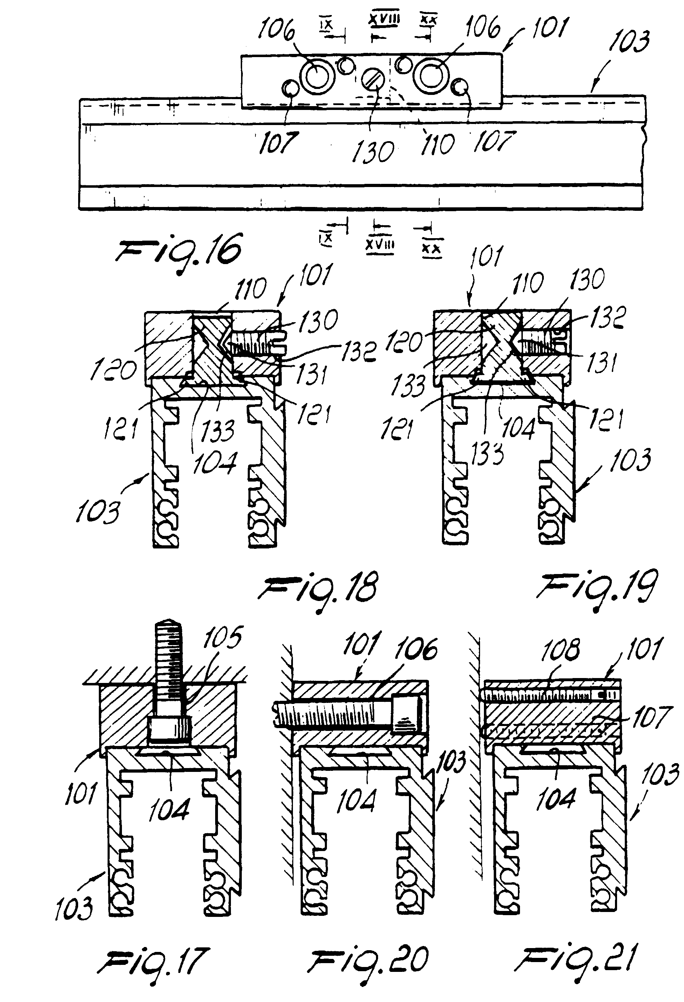

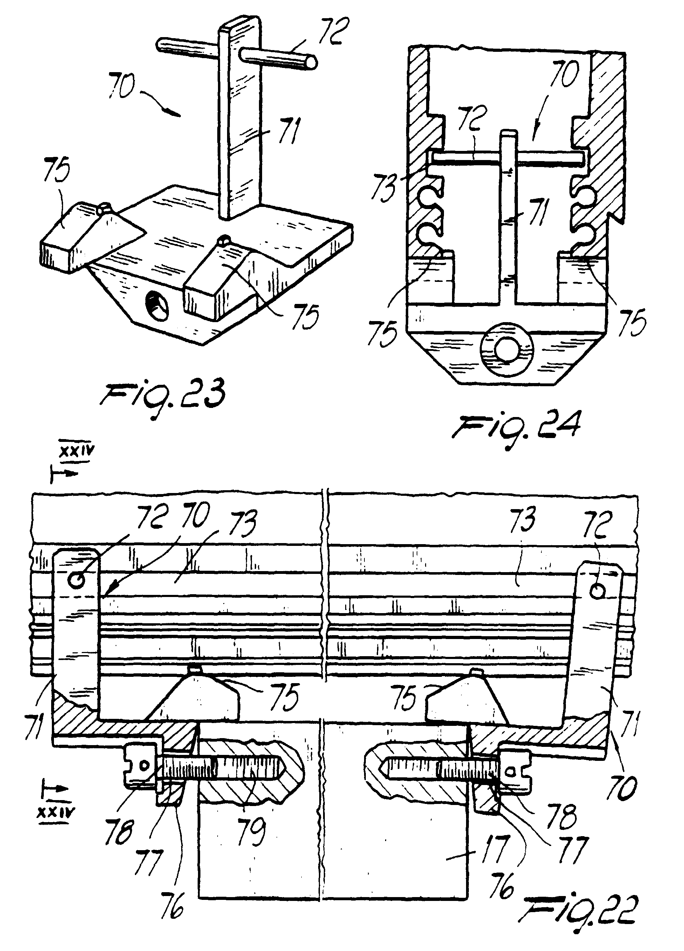

Figures 13-21 illustrate a device according to another aspect of the invention comprising a fixing block, generally indicated by the reference numeral 101, which advantageously has a substantially flattened parallelepipedal configuration and defines, on its lower face, a plane 102 for its coupling to the supporting profiled element 103 of an optical rule.

The supporting profiled element 103 has a coupling seat 104, advantageously dovetail shaped, as described before.

The fixing block 1 has a pair of vertical holes 105 for inserting fixing screws if the fixing block 101 is to be fixed to an upwardly arranged fixed structure, as schematically illustrated in figure 17, and furthermore has a pair of horizontal holes 106 for fixing the block 101 to a rearwardly arranged supporting surface or fixed structure, as schematically shown in figures 18 to 21.

In diametral positions with respect to the horizontal holes 106 there are threaded locator holes 107 in which locator dowels 108, are insertable and have the function of compensating any defects in planarity of the supporting structure, similarly to what previously described.

An important peculiarity of the invention resides in that the block 101 defines, in one of its middle portions, a seat 110, open at least at the abutment face 102, which can be accessed along a direction which is perpendicular to the prevailing plane of arrangement of the block 101 and perpendicular to the longitudinal extension of the profiled element 103.

A coupling element 120 is insertable in said seat 110 and is removably associable with the profiled element 103.

For this purpose, the coupling element 120 has, at its base, feet 121 which are insertable in the dovetail coupling 104 defined by the profiled element 103.

In this manner the element 120 is arrangeable at any point of the profiled element 103 and protrudes from the profiled element 103 along a direction which is perpendicular to the longitudinal extension of said profiled element.

The coupling element 120 is removably insertable in the seat 110 and is lockable by means of locking means which interact between the fixing block 101 and the coupling element 120.

Said locking means are advantageously constituted by a locking dowel 130 having a conical point 131 which inserts in a locking hole 132 defined by the block 101 and leading into the seat 110.

The coupling element 120 correspondingly defines, on one of its portions which is arranged facing the locking hole 132, a conical recess 133 in which the conical point 132 is insertable, thus creating a limited translatory component along a direction which is perpendicular to the extension of the profiled element 103, which in practice performs a stable locking of said profiled element 103 against the fixing block 101.

In this manner it is possible to correctly locate the various blocks 101 on the fixed structure and then perform the coupling of the profiled element 103 with an insertion along a direction which is perpendicular to the extension of said profiled element 103, performing the locking simply by inserting the locking dowel 130 which couples in the conical recess 133.

Furthermore if the guide must be removed it is not necessary to disassemble the fixing block 101 but simply to remove the locking dowel which allows to disengage the coupling element 120 from the seat 110.

For the sake of completeness in description, to the above it should be added that a discharge recess, generally indicated by the reference numeral 140, is provided on the coupling plane or face 103 at the region of access to the seat 110.

Figures 22 to 24 illustrate means for pre-positioning and locking the moving element with respect to the elongated body.

Said means are constituted by a pair of brackets 70 which engage with the opposite ends of the moving element and have, on their vertical arm 71, a crosspiece 72 which engages in a groove 73 defined inside the elongated body. The bracket 70 has a horizontal arm which has an abutment foot 75 which couples to the free edge of the arms which constitute the elongated body. A coupling wing 76 is furthermore provided and has a through hole 77 in which a bolt 78 inserts and engages in a threaded seat 79 defined by the moving element.

By tightening the bolt 78, the bracket rotates about the abutment foot 75 and consequently the crosspiece 72 engages in the groove.

In this manner the moving element is locked with respect to the elongated body, with the possibility of assembling the optical rule on the machine tool with extreme speed and precision.

Once the optical rule is fixed, by connecting the elongated body to the fixed structure and the moving element to the movable part, it is sufficient to remove the brackets by simply disengaging the bolt 78 and performing a rotation about the axis defined by the vertical wing which causes the disengagement of the crosspiece 72 from the grooves and consequently allows to extract the bracket from the elongated body.

From the above it can thus be seen that the invention achieves the intended aim and objects, and in particular the fact is stressed that the various fixing means adopted offer the possibility of making the optical rule according to the invention extremely versatile and applicable in any condition, without entailing particular problems in labor or installation.

Another important aspect of the invention furthermore resides in that by providing a male coupling element and a female coupling element on the elongated body allows to apply it both to an upwardly arranged fixed structure and to a laterally arranged fixed structure, with the possibility of adapting it to all contingent installation requirements.

Furthermore, the particular locking means adopted allow, if required, to rapidly uncouple the optical rule with the possibility of immediately re-couple it. since the adopted presettings maintain the positions preselected for fixing.

The invention thus conceived is susceptible to numerous modifications and variations, all of which are within the scope of the inventive concept.

Furthermore all the details may be replaced with other technically equivalent elements.

In practice, the materials employed, so long as compatible with the specific use, as well as the contingent shapes and dimensions may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Optical rule comprising an elongated profiled body (1, 103) having, on its outer surface, at least one female dovetail coupling element (10, 104) for its removable coupling to means (30, 40, 50, 120, 60) for fixing the optical rule to a fixed structure, wherein the profiled body (1, 103) defines a U-shaped transverse cross section and has an opening region provided with a first pair of profiled gaskets (19) engageable with the stem (20) of a movable element (17), the removable fixing means comprise upper blocks (30) having a lateral tab (31) separated from the remaining portion of the upper block by a transverse notch (32), a hole (33) in said tab for engagement with a screw (34) for fixing to a fixed structure arranged upwardly to said profiled body (1, 103), and dovetail feet (35) separated by a transverse notch (36) being provided in the remaining portion of said body (1, 103), opposite pairs of threaded holes (37) being provided for engagement with threaded dowels (38) for spacing said dovetail feet (35) insertable into said female dovetail coupling element (10, 104) which leads onto said notch, characterized in that said profiled body (1,103) comprises a second pair of profiled gaskets (19) in said opening region engageable with said stem (20) of said movable element (17), and in that said fixing means have a fixing screw (40) engageable in a through opening (41) which leads at the lateral region of said elongated body, a sealing bush (42) being furthermore provided surrounding said fixing screw, said bush having an outer thread and retaining in position a tension block (43) which defines a seat for engagement with said bush and is associatable with the end closure plate of said elongated body.

2. Optical rule according to claim 1, wherein said removable fixing means have a lateral fixing block (50) engageable in the upper central portion of said elongated body, said block having a longitudinal slot (51) which separates a pair of dovetail coupling feet (52), there being a central hole (53) in said lateral-fixing block for coupling to a screw for locking to a laterally arranged fixed structure (54).

3. Optical rule according to claim 2, which comprises a pair of threaded locator holes (55) in which there inserts an abutment dowel (56) for the precise positioning of said lateral-fixing block.

4. Optical rule according to claim 1, 2 or 3, which comprises threaded locking holes (57) in which there engages a threaded dowel (58) for spacing said dovetail coupling feet with related insertion thereof in said female dovetail coupling element.

5. Optical rule, according to one or more of the preceding claims, wherein said removable fixing means have a front-coupling block constituted by a front bar (60) which defines a seat (63) for coupling to the lower portion of said male dovetail coupling element, upper portions, joined by means of screw means (66) and defining means (65) for coupling to the upper portion of said male dovetail coupling element, engaging with said front bar.

6. Optical rule according to one or more of the preceding claims, which comprises a fixing block (101) fixable to a fixed structure and defining a seat (110) in which a coupling element (120) is removably insertable and is associatable with a supporting profiled element (103) of said optical rule, there being furthermore locking means (130) interacting between said fixing block and said coupling element for locking said supporting profiled element with respect to said fixing block.

7. Optical rule according to claim 1, wherein said fixing block (101) has a pair of vertical fixing holes (105) for its coupling to an upwardly arranged fixed structure and a pair of horizontal fixing holes (106) for coupling to a rearwardly arranged fixed structure.

8. Optical rule according to one or more of the preceding claims, which comprises locator holes (107) arranged diametrally with respect to said horizontal fixing holes, threaded locator dowels (108) engaging in said locator holes.

9. Optical rule according to one or more of the preceding claims, wherein said coupling element (120) has a coupling foot (121) removably insertable in the dovetail seat (104) defined by said supporting profiled element, said coupling element extending substantially perpendicular with respect to the longitudinal extension of said profiled element.

10. Optical rule according to one or more of the preceding claims, wherein said seat (110) is open at least at the abutment plane (102) of said block for coupling to said profiled element, said coupling element being insertable in said seat along a direction which is substantially perpendicular to the longitudinal extension of said bar.

11. Optical rule according to one or more of the preceding claims, wherein said locking means are constituted by a locking dowel (130) with a conical point (131) insertable in a locking hole (132) leading into said seat (110), said conical point of said locking dowel being movable so as to make contact with a conical recess (133) provided on said coupling element on the surface portion directed towards said locking hole to generate a translatory component adapted to move said supporting profiled element to lock against said fixing block.

12. Optical rule according to one or more of the preceding claims, which comprises means for the pre-positioning locking of said moving element with respect to said elongated body, said means being constituted by a pair of brackets (70) engageable on the opposite portion of said moving element, said brackets having a vertical arm (71) ending with a crosspiece (72) associatable within grooves (73) defined by said elongated body, said bracket defining an abutment foot (75) for its coupling to the edge of the opening of said elongated body and a coupling wing (76) in which there inserts a bolt (78) which is screwable in a corresponding threaded seat (79) defined by said moving element, a rotation of said bracket with fulcrum in said foot and consequent locking of said crosspiece in said groove being generated upon the actuation of said screw.

## Patentansprüche

1. Optisches Lineal, bestehend aus einem längsprofilierten Körper (1, 103), der auf seiner äußeren Oberfläche mindestens ein schwalbenschwanzförminges Aufnahmeelement (10, 104) für seine lösbare Kupplung an Elementen (30, 40, 50, 120, 60) zur Fixierung des optischen lineals an einer festen Struktur aufweist, wobei der profilierte Körper (1, 103) einen U-förmigen Querschnitt aufweist und einen Öffnungsbereich, versehen mit einem ersten Paar von profilierten Dichtungen (19), die mit einem Schaft (20) eines beweglichen Elementes (17) in Eingriff bringbar sind und daß die lösbaren Befestigungselemente aus oberen Blöcken (30) bestehen, die eine seitliche Fahne (31) aufweisen, welchen vom restlichen Teil des Blockes durch eine Quernut (32) abgeteilt ist und ein Loch (33) in der Fahne für den Einsatz einer Schraube (34) zur Fixierung an einer festen Struktur oberhalb des profilierten Körpers (1, 103), welche Blöcke durch eine transversale Nut (36) abgeteilte schwalbenschwanzförmige Füße (35) haben, die im restlichen Teil des Körpers (1, 103) angeordnet sind und gegenüberstehende Paare von Gewindelöchern (37), vorgesehen für die Anordnung von Gewindezapfen (38) für die Spreizung der schwalbenschwanzförmigen Füße (35), die in das schwalbenschwanzförmige Aufnahmekupplungsteil (10, 104) einschiebbar sind, das zu dieser Nut führt,
dadurch gekennzeichnet, daß besagter profilierter Körper(1,103) ein zweites Paar von profilierten Dichtungen (19) in besagtem Öffnungsbereich umfaßt, die mit dem besagten Schaft (20) des beweglichen Elementes in Eingriff bringbar sind, und daß besagte Fixierungselemente aus einer Fixierungsschraube (40) bestehen, einbringbar in eine Durchgangsöffnung (41), die zu einem seitlichen Bereich des Längskörpers führt, eine Abdichtungsbüchse (42), ist für die Umschließung besagter Fixierungsschraube vorgesehen ist, wobei die Büchse ein Außengewinde und eine Verankerung in Position eines Spannblockes (43) hat, der einen Sitz für den Eingriff der Büchse definiert und assoziierbar ist mit der Endverschlußplatte des Längskörpers.

2. Optisches Lineal gemäß Anspruch 1, wobei die lösbaren Fixierungselemente einen seitlichen Fixierungsblock (50) haben, der eingreifbar in den oberen zentralen Teil des Längskörpers ist, wobei der Fixierungsblock einen Längsschnitt (51) aufweist, der ein Paar von schwalbenschwanzförmigen Kupplungsfußen (52) trennt, wobei im seitlichen Fixierungsblock ein zentrales Loch (53) angeordnet ist für die Kupplung an eine Schraube zur Festlegung an eine seitlich angeordnete, feste Struktur (54).

3. Optisches Lineal nach Anspruch 2, welches mit einem Paar von mit Gewinde versehenen Positionierungslöchern (55) versehen ist, in die ein Positionszapfen (56) für die präzise Positionierung des besagten Seitenfixierungsblockes eingreift.

4. Optisches Lineal nach Anspruch 1, 2, oder 3, welches mit Gewinde versehene Festlegungslöcher (57) aufweist, in die ein Gewindezapfen (58) eingreift für die Spreizung der schwalbenschwanzförmigen Kupplungsfüße bei entsprechendem Einschub in das besagte schwalbenschwanzförmige Aufnahmekupplungselement.

5. Optisches Lineal nach einem oder mehreren der vorangehenden Ansprüche, wobei die lösbaren Fixierungselemente einen Frontkupplungsblock,gebildet durch eine Frontstück (60), aufweisen, der einen Sitz (63) für die Kupplung an dem unteren Teil des besagten schwalbenschwanzförmigen Einsteckkupplungsteiles enthält und obere Teile, verbunden durch Schraubenelemente (66) und der Elemente (65) enthält für die Ankopplung an das obere Teil des Einsteckkupplungselementes, das mit dem Frontstück verbunden ist.

6. Optisches Lineal nach einem oder mehreren der vorangehenden Ansprüche, welches einen Fixierungsblock (101) aufweist, fixierbar an einer festen Struktur, und das einen Sitz (110) enthält, in dem ein Kupplungselement (120) lösbar eingeschoben und assoziierbar mit einem profilierten Tragelement (103) des besagten Optischen Lineals ist, wobei ferner Sperrelemente (130) vorgesehen sind, wirksam zwischen dem Fixierungsblock und dem Kupplungselement für die Sperrung des profilierten Tragelementes in bezug auf den Fixierungsblock.

7. Optisches Lineal nach Anspruch 1, worin besagter Fixierungsblock (101) ein Paar von vertikalen Fixierungslöchern (105) für sein Kopplung an eine oberhalb angeordnete feste Struktur aufweist und ein Paar von horizontalen Fixierungslöchern (106) für die Ankopplung an eine rückwärtig angeordnete Feststruktur.

8. Optisches Lineal nach einem oder mehreren der vorangehenden Ansprüche, welches Positionierungslöcher (107) aufweist, diametral in bezug auf besagte horizontale Fixierungslöcher angeordnet, wobei mit Gewinde versehene Positionierungszapfen (108) in diesen Positionierungslöchern angeordnet sind.

9. Optisches Lineal nach einem oder mehreren der vorangehenden Ansprüche, worin das Kupplungselement (120) einen Kupplungsfuß (121) aufweist, der lösbar eingeschoben ist in den Schwalbenschwanzsitz (104), gebildet aus dem profilierten Tragelement, wobei sich das Kupplungselement im wesentlichen senkrecht in bezug auf das sich längs erstreckende profilierte Element erstreckt.

10. Optisches Lineal nach einem oder mehreren der vorangehenden Ansprüche, worin der Sitz (110) mindestens in der Anschlußebene (102) des Blockes für die Ankupplung des profilierten Elementes offen ist und wobei das Kupplungselement in diesem Sitz längs einer Richtung einsetzbar ist, die im wesentlichen senkrecht ist zur Längserstreckung des Frontstückes.

11. Optisches Lineal nach einem oder mehreren der vorangehenden Ansprüche, worin die Sperrelemente durch einen Sperrzapfen (130) mit einer konischen Spitze (131), das zum Sitz (110) führt, wobei die konische Spitze des Sperrzapfens derart bewegbar ist, daß sie in Kontakt kommt mit einer konischen Ausnehmung (133) im Oberflächenteil des Kupplungselementes, der gegen das Sperrloch gerichtet ist, um eine translatoriche Komponente zu erzeugen, angepaßt, um das profiliertes Tragelement gegen den Fixierungsblock festzulegen.

12. Optisches Lineal nach einem oder mehreren der vorangehenden Ansprüche, welches Elemente für die vorpositionierende Festlegung des beweglichen Elementes in bezug auf den Längskörper aufweist, wobei diese Elemente aus einem Paar von Sperrbügeln (70) gebildet sind, ankuppelbar an das gegenüberstehende Teil des Bewegungselementes und wobei die Sperrbügel einen vertikalen Arm (71) aufweisen mit einem Querschnitt (72) am Ende, das Nuten (73), gebildet vom Längskörper, zuordnungsbar ist und wobei ferner die Sperrbügel einen Lagerfuß (75) aufweisen für ihre Kopplung zum Rand der Öffnung des Längskörpers und einen Kupplungsflügel (76), in den ein Bolzen (78) eingesetzt ist, der mit einem mit Gewinde versehenen Sitz (79) im Bewegungselement verschraubbar ist, wobei eine Drehung um die Drehachse am Fuß und in Konsequenz eine Festlegung des Querstückes in der Nut durch Betätigung der Schraube bewirkt wird.

## Revendications

1. Règle optique comprenant un corps profilé allongé (1, 103) ayant sur sa surface extérieure au moins un élément d'accouplement en queue d'aronde femelle (10, 104) comme moyens d'accouplement démontables par rapport à des moyens (30, 40, 50, 120, 60) de fixation de la règle optique à une structure fixe, dans laquelle le corps profilé (1, 103) présente une section transversale en forme de U et comporte une ouverture pourvue d'une première paire de joints profilés (19) venant au contact de la tige (20) d'un élément mobile (17), les moyens de fixation démontables comprennent des blocs supérieurs (30) ayant une patte latérale (31) séparée de la partie restante du bloc supérieur par une encoche transversale (32), un trou (33) dans ladite patte pour l'introduction d'une vis (34) afin de l'assembler à une structure fixe disposée vers le haut dudit corps profilé (1, 103), et un tenon en queue d'aronde (35) séparé par une encoche transversale (36), qui est prévu dans la partie restante du corps (1, 103), tandis que des paires de trous taraudés (37) se faisant face, qui débouchent dans ladite encoche, sont prévues pour recevoir des vis sans tête (38) aboutissant dans ladite encoche pour écarter le tenon en queue d'aronde (35) apte à être introduit dans l'élément d'accouplement en queue d'aronde femelle (10, 104) qui débouche dans ladite encoche, caractérisée en ce que ledit corps profilé (1, 103) comprend, dans ladite ouverture, une seconde paire de joints profilés (19) venant au contact de ladite tige (20) dudit élément mobile (17) et en ce que lesdits éléments de fixation ont une vis de fixation (40) pouvant être introduite dans un orifice traversant (41) qui débouche sur la partie latérale dudit corps allongé, une douille d'étanchéité (42) entourant ladite vis étant en outre prévue, ladite douille ayant un filetage extérieur et retenant en position un bloc de traction (43) qui définit un logement venant en contact avec ladite douille et qui peut être associé à la plaque de fermeture d'extrémité dudit corps allongé.

2. Règle optique selon la revendication 1, dans laquelle les moyens de fixation démontables comprennent un bloc de fixation latéral (50) coopérant avec la partie centrale supérieure dudit corps allongé, ledit bloc comportant une fente longitudinale (51) déterminant deux tenons d'accouplement en queue d'aronde (52), un trou central (53) étant prévu pour l'introduction d'une vis de verrouillage sur une structure fixe (54) disposée latéralement.

3. Règle optique selon la revendication 2, qui comprend une paire de trous taraudés (55) de positionnement dans lesquels est introduite une vis sans tête de butée (56) pour le positionnement précis dudit bloc de fixation latéral.

4. Règle optique selon la revendication 1, 2 ou 3 qui comprend des trous de blocage (57) dans lesquels une vis sans tête (58) est introduite pour écarter les tenons d'accouplement en queue d'aronde, ceux-ci étant eux-mêmes introduits dans l'élément d'accouplement en queue d'aronde femelle.

5. Règle optique selon l'une quelconque des revendications précédentes, dans laquelle les moyens de fixation démontables comprennent un bloc d'accouplement frontal constitué par une barre frontale (60) dans laquelle est prévu un logement (63) pour son assemblage à la partie inférieure de l'élément d'accouplement en queue d'aronde mâle, tandis que les parties supérieures du bloc, reliées au moyen de vis (66), définissent des moyens (65) pour l'assemblage de la partie supérieure dudit élément d'accouplement en queue d'aronde mâle avec ladite barre frontale.

6. Règle optique selon l'une quelconque des revendications précédentes, qui comprend un bloc de fixation (101) pouvant être assemblé à une structure fixe et définissant un logement (110) dans lequel un élément d'accouplement (120), qui peut être introduit de manière démontable, peut être associé à un élément-support profilé (103) de ladite règle optique, comportant de plus un moyen de blocage (130) coopérant avec le bloc de fixation et ledit élément d'accouplement pour bloquer l'élément-support profilé par rapport audit bloc de fixation.

7. Règle optique selon la revendication 1, dans laquelle le bloc de fixation (101) comprend deux trous de fixation verticaux (105) pour sa fixation à une structure fixe disposée vers le haut et deux trous de fixation horizontaux (106) pour l'assemblage avec une structure fixe tournée vers l'arrière.

8. Règle optique selon l'une quelconque des revendications précédentes, qui comprend des trous de positionnement (107) disposés sur un même diamètre par rapport aux trous de fixation horizontaux, des vis sans tête de positionnement (108) étant vissées dans les trous de positionnement.

9. Règle optique selon l'une quelconque des revendications précédentes, dans laquelle l'élément d'accouplement (120) comprend un pied d'accouplement (121) qui peut être introduit de manière démontable dans le logement en queue d'aronde (104) défini dans ledit élément-support profilé, ledit élément d'accouplement s'étendant sensiblement perpendiculairement par rapport à la direction longitudinale de l'élément profilé.

10. Règle optique selon l'une quelconque des revendications précédentes, dans laquelle ledit logement (110) est ouvert au moins sur le plan de butée (102) du bloc d'accouplement pour son assemblage audit élément profilé, tandis que l'élément d'accouplement peut être introduit dans ledit logement en suivant une direction qui est sensiblement perpendiculaire à la direction longitudinale de ladite barre.

11. Règle optique selon l'une quelconque des revendications précédentes, dans laquelle lesdits moyens de blocage sont constitués par un goujon (130), à pointe (131), qui peut être introduit dans un trou de blocage (132) débouchant dans ledit logement (110), ladite pointe du goujon étant mobile de manière à venir en contact avec une dépression conique (133) ménagée dans ledit élément d'accouplement sur sa face orientée en direction dudit trou de blocage pour produire une composante de translation servant à déplacer ledit élément-support profilé pour le bloquer contre ledit bloc de fixation.

12. Règle optique selon l'une quelconque des revendications précédentes, qui comprend un moyen de blocage de pré-positionnement dudit élément mobile par rapport audit corps allongé, lesdits moyens étant constitués par deux support (70) en prise avec la partie opposée dudit élément mobile, chaque support comportant un bras vertical (71) se terminant par une pièce transversale (72) pouvant être associée à des rainures (73) définies dans ledits corps allongé, ledit support comportant un pied de butée (75) pour son accouplement avec le bord de l'ouverture dudit corps allongé et une aile d'accouplement (76) dans laquelle une vis (78) est introduite qui peut être vissée dans un trou taraudé correspondant (79) formé dans ledit élément mobile, la manoeuvre de ladite vis engendrant une rotation dudit support autour dudit pied et le blocage subséquent de ladite pièce transversale dans ladite rainure.
